## Europäisches Patentamt

## European Patent Office

## Office européen des brevets

(11) Veröffentlichungsnummer: **0 054 719**
**B1**

(12) # EUROPÄISCHE PATENTSCHRIFT

(45) Veröffentlichungstag der Patentschrift:
27.07.83

(21) Anmeldenummer: 81109237.8

(22) Anmeldetag: 29.10.81

(51) Int. Cl.³: **F 25 B 29/00**, F 25 B 15/12,
F 24 D 11/02, F 24 J 3/04

(54) Resorptionswärmepumpe.

(30) Priorität: 19.12.80 DE 3048056

(43) Veröffentlichungstag der Anmeldung:
30.06.82 Patentblatt 82/26

(45) Bekanntmachung des Hinweises auf die Patenterteilung:
27.07.83 Patentblatt 83/30

(84) Benannte Vertragsstaaten:
AT CH FR GB LI NL

(56) Entgegenhaltungen:
DE-A-2 838 780
DE-A-2 910 288
DE-C-640 006
US-A-2 392 894
H. DREES »Kühlanlagen« 11. Auflage 1974, VEB
VERLAG TECHNIK, Berlin, Seiten 175, 192, 193

(73) Patentinhaber: M.A.N. MASCHINENFABRIK
AUGSBURG-NÜRNBERG Aktiengesellschaft, Dachauer
Strasse 667 Postfach 50 06 20, D-8000 München 50 (DE)

(72) Erfinder: Engelhard, Jürgen, Dr.,
Marienburgerstrasse 56 b, D-8000 München 81 (DE)

Resorptionswärmepumpe

Die Erfindung bezieht sich auf eine Resorptionswärmepumpe mit einem Austreiber und einer Rektifikationssäule, aus denen Arbeitsmitteldampf einem Resorber zugeführt wird, ferner mit einem den Resorber mit einem Entgaser verbindenden Kreislauf, in dem die reiche Lösung des Arbeitsmittels aus dem Resorber dem Entgaser zufließt und eine arme Lösung in den Resorber zurückfließt, sowie mit einem mit dem Austreiber durch einen Kreislauf verbundenen Absorber, in dem das im Entgaser verdampfte und über eine Leitung zugeführte Arbeitsmittel absorbiert und dem Austreiber wieder zugeführt wird.

Resorptionswärmepumpen gewinnen bei Einsätzen für relativ hohe Nutztemperaturen gegenüber den nach dem Absorptionsprinzip arbeitenden Wärmepumpen an Bedeutung. Bei den Absorptionswärmepumpen führen nämlich hohe Nutztemperaturen zu einem hohen Kondensationsdruck. Dagegen ist die Resorptionsmaschine nicht an derartige hohe Drücke gebunden, weil der aus dem Austreiber kommende Arbeitsmitteldampf nicht kondensiert, sondern im Resorber in einer Lösung absorbiert wird.

Aus der DE-OS 2 838 780 ist eine Resorptionswärmepumpe mit einem im Gattungsbegriff genannten Aufbau bekannt. Dieses bekannte Resorptionswärmepumpen-System ist jedoch nicht in allen Anwendungsbereichen wirtschaftlich einsetzbar. Ein Beispiel hierfür ist der Einsatz für Heizsysteme in Wohnhäuser, bei dem die geforderte Nutztemperatur nicht konstant ist. In solchen Fällen müßte die Arbeitsmittel-Konzentration entsprechend der höchsten Nutztemperatur eingestellt werden. Das hat aber den Nachteil, daß für den Teillastbetrieb die Wärmepumpe mit einer ungünstigen Konzentration arbeitet, was zu einem entsprechend schlechten Wärmeverhältnis führt.

Der Erfindung liegt die Aufgabe zugrunde, eine Wärmepumpe der eingangs genannten Art zu schaffen, die in einem breiten Nutztemperaturbereich leistungsfähig arbeitet.

Die Aufgabe ist erfindungsgemäß dadurch gelöst, daß im Kreislaufzweig für die arme Arbeitsmittellösung zwischen Entgaser und Resorber eine Abzweigleitung zum Austreiber bzw. zur Rektifikationssäule sowie ein Regelventil vorgesehen sind, wobei mit dem Regelventil der Rückfluß der armen Lösung in den Resorber und in den Austreiber bzw. in die Rektifikationssäule in Abhängigkeit des Resorberdruckes regelbar ist. Dies ermöglicht eine Änderung bzw. eine Anpassung der Konzentration im Resorber an die jeweilig geforderte Nutztemperatur. Entsprechend dem Durchfluß ändert sich die Füllmenge im Resorber und im Entgaser, wodurch auch die Konzentration im Absorber und Austreiber verändert wird. Das Wärmeverhältnis wird dabei in jedem Betriebsbereich optimiert, so daß das Gerät sowohl im Vollastbereich als auch im Teillastbereich hohe Leistungen erbringen kann.

Damit ist mit fertigungstechnisch sehr einfachen Mitteln erreicht, daß die Konzentration des Resorptionsprozesses an die unterschiedlichen Nutztemperaturen angepaßt werden kann, so daß in allen Nutztemperaturbereichen das Gerät mit hohem Wirkungsgrad betrieben werden kann.

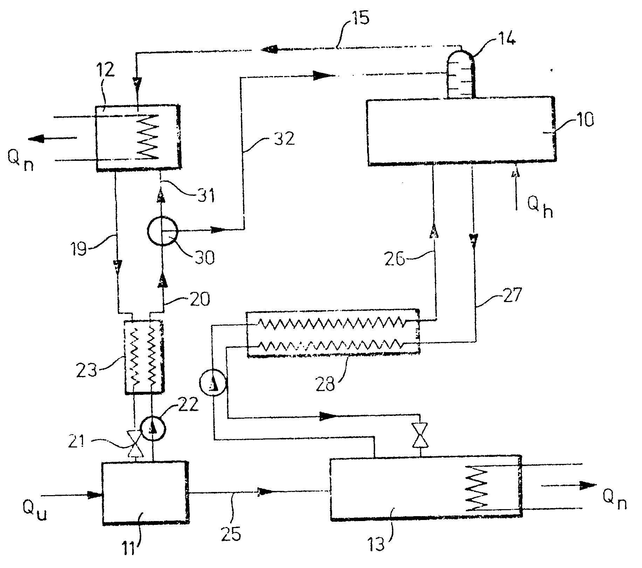

Die Erfindung wird nachfolgend anhand der Zeichnung näher beschrieben.

Mit einer Resorptionswärmepumpe wird, wie bei den allgemeinen Sorptionswärmepumpen — zu denen auch die nach dem Absorptionsprinzip arbeitenden Geräte gehören — die einem Austreiber 10 zugeführte Wärme $Q_h$ höherer Temperatur und die bei niedriger Temperatur einem Entgaser 11 zugeführte Wärme $Q_u$ aus der Umgebung in eine Wärmemenge $Q_n$ mittlerer Temperatur umgewandelt. Die als Nutzwärme dienende Wärmemenge $Q_n$ wird in einem Resorber 12 und einem Absorber 13 abgeführt und in der Zeichnung nicht dargestellten Verbrauchern, wie z. B. Heizkörpern, zugeleitet.

Durch die Zuführung von Heizwärme $Q_h$ wird im Austreiber 10 aus einer Mischung von Arbeitsmittel und Lösungsmittel Arbeitsmitteldampf entwickelt, der in einer Rektifikationssäule 14 von überschüssigem Lösungsmittel befreit, über eine Leitung 15 dem Resorber zuströmt. In dem Resorber 12 wird der Arbeitsmitteldampf von einer armen Arbeitsmittellösung eines zwischen dem Resorber 12 und dem Entgaser 11 umlaufenden Lösungskreislaufes 19, 20 absorbiert. Die im Resorber 12 angereicherte Lösung gelangt nach ihrer Entspannung in einem Ventil 21 in den Entgaser 11, wo sie entgast. Die entgaste Lösung wird durch eine Lösungspumpe 22 wieder dem Resorber 12 zugeführt, wobei ein zwischengeschalteter erster Temperaturwechsler 23 diesen Resorptionsprozeß vervollständigt.

Unter Zuführung der Umgebungswärme $Q_u$ entwickelt sich im Entgaser 11 wiederum Arbeitsmitteldampf, der über eine Leitung 25 in den Absorber 13 gelangt, wo er unter Abgabe von Wärme $Q_n$ absorbiert wird. Der Prozeß wird schließlich in einem Absorber-Austreiber-Kreislauf 26, 27 abgeschlossen, dem ein zweiter Temperaturwechsler 28 zugeordnet ist.

Der Rückstrom der armen Lösung wird in einem Zweigstrom für den Resorber 12 und einen Zweigstrom für den Rektifikator 14 aufgeteilt. Diese Teilströme werden von einem Regelventil 30 in Abhängigkeit des im Resorber 12 anstehenden Druckes und damit mittelbar in Abhängigkeit der Nutztemperatur gesteuert. Das Regelventil 30 ist so eingestellt, daß bei maximalem Resorberdruck der Rückfluß in den Resorber 12 und bei abfallendem Resorberdruck zunehmend in den Rektifikator 14 geleitet wird.

Bei niedrigen Nutztemperaturen liegt der Druck im Resorber unter dem maximalen Betriebsdruck. Dabei wird die aus dem Entgaser 11 kommende arme Lösung über eine Leitung 32 in die Rektifikationssäule gepumpt. Durch diesen zusätzlichen Rückfluß verringert sich der Wassergehalt des im Austreiber 10 erzeugten Dampfes und der Wasseranteil im Resorber-Entgaser-Kreislauf 19, 11, 20, 12. Gleichzeitig verringert sich durch die fehlende bzw. verringerte Zufuhr im Resorber der Lösungsumlauf und damit die Füllmenge im Resorber 12 und im Entgaser 11. Diese Lösung mit hohem Arbeitsmittelanteil, bezogen auf die Konzentration im Austreiber, gelangt zusätzlich in den Austreiber-Absorber-Kreislauf 13, 26, 10, 27 und erhöht dort die Arbeitsmittelkonzentration. Auf diese Weise wird das Wärmeverhältnis gegenüber einem Resorptionsprozeß mit fest eingestellten Konzentrationen verbessert.

Mit steigender Nutztemperatur steigt der Druck im Resorber 12, wobei das Regelventil 30 in entsprechendem Maße den Rückfluß über eine Leitung 31 in den Resorber 12 freigibt, so daß der Dampf bei geringerem Druck resorbiert werden kann. Gleichzeitig steigt durch den verringerten Rückfluß in die Rektifikationssäule 14 der Wassergehalt des Dampfes, wodurch der Kondensationsdruck sinkt. Dadurch wird der Druck im Resorber bei weiter steigender Nutztemperatur konstant gehalten. Durch den steigenden Wasseranteil erhöht sich auch der Lösungsumlauf im Resorber-Entgaser-Kreislauf und entsprechend auch die Füllmenge in diesen Apparaten. Dieses führt zu einer Verringerung der Arbeitsmittelkonzentration im Austreiber-Absorber-Kreislauf, wodurch auch im Absorber 13 höhere Nutztemperaturen möglich werden.

Ein weiterer Vorteil der erfindungsgemäßen Wärmepumpe besteht darin, daß durch die Rückführung von Lösung aus dem Entgaser 11 in die Rektifikationssäule 14 der Wassergehalt im Resorber-Entgaser-Kreislauf ständig korrigiert wird, so daß die Reinheit des im Austreiber 10 erzeugten Dampfes bei dieser Prozeßführung nicht mehr sehr wichtig ist. Der Dampf muß nicht mehr so weit abgekühlt werden, so daß die Rektifikations- bzw. Dephlegmationswärme voll genutzt wird. Dabei ist es möglich, die Kühlfläche im Dephlegmator zu verringern, oder sogar den Dephlegmator ganz wegzulassen.

Als Arbeitsmittel bzw. Lösungsmittel wird vorzugsweise $NH_3-H_2O$ verwendet.

Aufgrund der stark variierenden Flüssigkeitsmenge im Resorber-Entgaser-Kreislauf sollte das Ventil 21 geregelt werden. Besonders geeignet ist eine Reglung nach dem Flüssigkeitsniveau am Ausgang des Resorbers 12. Dadurch wird sowohl ein unerwünschter Rückstau im Resorber 12 als auch das Einströmen von Dampf in den Temperaturwechsler 23 vermieden, was zu einer Verschlechterung des Wärmeverhältnisses führen würde.

## Patentansprüche

1. Resorptionswärmepumpe mit einem Austreiber (10) und einer Rektifikationssäule (14), aus denen Arbeitsmitteldampf einem Resorber (12) zugeführt wird, ferner mit einem den Resorber mit einem Entgaser (11) verbindenden Kreislauf (19, 20), in dem die reiche Lösung des Arbeitsmittels aus dem Resorber dem Entgaser zufließt und eine arme Lösung in den Resorber zurückfließt, sowie mit einem mit dem Austreiber durch einen Kreislauf (26, 27) verbundenen Absorber (13), in dem das im Entgaser verdampfte und über eine Leitung (25) zugeführte Arbeitsmittel absorbiert und dem Austreiber wieder zugeführt wird, dadurch gekennzeichnet, daß im Kreislaufzweig (20) für die arme Arbeitsmittellösung zwischen Entgaser (11) und Resorber (12) eine Abzweigleitung (32) zum Austreiber (10) bzw. zur Rektifikationssäule (14) sowie ein Regelventil (30) vorgesehen sind, wobei mit dem Regelventil der Rückfluß der armen Lösung in den Resorber und in den Austreiber bzw. in die Rektifikationssäule in Abhängigkeit des Resorberdruckes regelbar ist.

2. Wärmepumpe nach Anspruch 1, dadurch gekennzeichnet, daß der Resorber (12) und der Entgaser (11) als Rieselapparate ausgebildet sind, wobei die Arbeitsmittellösung gravitationsbedingt durch beide Apparate fließt.

## Claims

1. A resorption heat pump comprising an ejector (10) and a rectification column (14), from which working medium vapour is fed to a resorber (12), and also comprising a circuit (19, 20) which connects the resorber to a degasifier (11) and in which the concentrated solution of working medium flows from the resorber to the degasifier and a depleted solution flows back to the resorber, also comprising an absorber (13) connected to the ejector by a circuit (26, 27) in which the working medium evaporated in the degasifier and fed via a line (25) is absorbed and returned to the separator, characterised in that the branch of the circuit (20) for the depleted working medium solution between the degasifier (11) and the resorber (12) contains a branch line (32) leading to the ejector (10) and to the rectification column (14), and a control valve (30), the reflux of depleted solution to the resorber and to the ejector and the rectification column being controllable by means of the control valve in dependence on the resorber pressure.

2. A heat pump according to claim 1, characterised in that the resorber (12) and the degasifier (11) are in the form of trickling devices, the working medium solution flowing by gravity through both devices.

## Revendications

1. Pompe à chaleur à absorption comportant un expulseur (10) et une colonne de rectification (14) à partir desquels on conduit un milieu de travail vaporisé à un résorbeur (12) ainsi qu'un circuit (19, 20) qui relie le résorbeur à un dégazeur (11) et dans lequel la solution riche du milieu de travail circule du résorbeur vers le dégazeur et une solution pauvre retourne au résorbeur, ladite pompe à chaleur comportant également un absorbeur (13) qui est relié à l'expulseur par un circuit (26, 27) et dans lequel le milieu de travail vaporisé dans le dégazeur et amené par une canalisation (25), est absorbé et renvoyé à l'expulseur, caractérisée en ce que, dans la branche de circuit (20) destinée à la solution pauvre de milieu de travail, entre le dégazeur (11) et le résorbeur (12), on prévoit une canalisation de dérivation (32) vers l'expulseur (10) et/ou la colonne de rectification (14), ainsi qu'une vanne de régulation (30), le reflux de la solution pauvre dans le résorbeur et dans l'expulseur et/ou dans la colonne de rectification étant réglable en fonction de la pression du résorbeur au moyen de la vanne de régulation.

2. Pompe à chaleur selon la revendication 1, caractérisée en ce que le résorbeur (12) et le dégazeur (11) sont constitués par des appareils à levage, la solution de milieu de travail coulant à travers les deux appareils sous l'effet de la gravitation.